(19) Europäisches Patentamt

European Patent Office

Office européen des brevets

(11) Veröffentlichungsnummer: **0 280 014**

**A1**

(12) # EUROPÄISCHE PATENTANMELDUNG

(21) Anmeldenummer: **88100340.4**

(22) Anmeldetag: **12.01.88**

(51) Int. Cl.⁴: **C03B 37/16**

(30) Priorität: **30.01.87 DE 3702823**

(43) Veröffentlichungstag der Anmeldung:
**31.08.88 Patentblatt 88/35**

(84) Benannte Vertragsstaaten:
**AT BE CH DE ES FR GB GR IT LI LU NL SE**

(71) Anmelder: **Siemens Aktiengesellschaft Berlin
und München
Wittelsbacherplatz 2
D-8000 München 2(DE)**

(72) Erfinder: **Fischbach, Reinhard, Dipl.-Ing.
Stiftsweg 1
D-8025 Unterhaching(DE)**
Erfinder: **Krause, Dieter
Pelheimerstrasse 7
D-8081 Spielberg(DE)**

(54) **Vorrichtung zum Ablängen der Zugentlastungsfasern von Kabeln.**

(57) Das Abhängen der insbesondere aus Aramid bestehenden Zugentlastungsfasern von Lichtwellenleiter-Kabeln wurde bislang mit Scheren vorgenommen, während bei konfektionierten Leitungen das Schneiden mit einer Diamanttrennscheibe zur Anwendung kommt. Die neue Vorrichtung soll einfach in der Bedienung sein und bei hohen Standzeiten eine sichere Fasertrennung gewährleisten.

Die neue Vorrichtung umfaßt
- einen Stempel (St) mit einer kegelförmigen oder gewölbten Druckfläche (Df),
- eine in den Stempel (St) in axialer Richtung eingebrachte Bohrung (B) zur Aufnahme des von Kabelmantel (Km) und Zugentlastungsfasern (Zf) befreiten Kabelendes und
- einen der Druckfläche (Df) des Stempels (St) zugeordneten Schneidring (Sr), durch welchen das Kabel (Kb) hindurchführbar ist.

Der Trennvorgang wird dann vorzugsweise durch Absenken des Stempels (St) vorgenommen.

Die Vorrichtung eignet sich grundsätzlich für das Ablängen der Zugentlastungsfasern von Kabeln und insbesondere der Aramid-Fasern von Lichtwellenleiter-Kabeln vor dem Anbringen von Crimphülsen.

## FIG 1

## Vorrichtung zum Ablängen der Zugentlastungsfasern von Kabeln

Die Erfindung betrifft eine Vorrichtung zum Ablängen der Zugentlastungsfasern von Kabeln, insbesondere von Lichtwellenleiter-Kabeln.

In Lichtwellenleiter-Kabeln befinden sich unterhalb des Kabelmantels Zugentlastungsfasern, die axiale Beanspruchungen aufnehmen und die Adern vor zu großen Beanspruchungen schützen. Bei diesen Zugentlastungsfasern handelt es sich meist um Aramid-Fasern, die einen Durchmesser von beispielsweise 10 μ aufweisen. Aramid-Fasern sind für die axiale Zugentlastung besonders gut geeignet, da sie einen hohen Dehnungswiderstand, eine große Festigkeit und eine große Biegsamkeit aufweisen. Die eigentliche Zugentlastung am Kabelende erfolgt dann dadurch, daß die einzelnen Fasern über eine Hülse zurückgeschlagen und mit einer Crimphülse fixiert werden. Die Zugentlastungsfasern müssen dabei vor dem Aufschieben der Crimphülse gekürzt werden, so daß sie nach dem Crimpen vollständig verdeckt sind. Bei einigen Steckerkonzepten ist ein Nachschneiden nicht möglich, da hierbei eine Beschädigung des Kabelmantels nicht mit Sicherheit ausgeschlossen werden kann.

Bislang wurden zum Ablängen der Zugentlastungsfasern Scheren verwendet, während bei konfektionierten Leitungen das Schneiden mit einer Diamanttrennscheibe zur Anwendung kommt. Neben den mechanischen Trennverfahren stehen für das Ablängen der Zugentlastungsfasern auch das Laserschneiden und das Wasserstrahlschneiden zur Auswahl, wobei beide Verfahren auch für das Abschneiden der Zugentlastungsfasern vor der Steckermontage geeignet sind.

Der Erfindung liegt die Aufgabe zugrunde, eine Vorrichtung zum Ablängen der Zugentlastungsfasern von Lichtwellenleiter-Kabeln zu schaffen, die einfach in der Bedienung ist und bei hohen Standzeiten eine sichere Fasertrennung gewährleistet.

Erreicht ist dieses Ziel durch
- einen Stempel mit einer kegelförmigen oder gewölbten Druckfläche,
- eine in den Stempel in axialer Richtung eingebrachte Bohrung zur Aufnahme des von Kabelmantel und Zugentlastungsfasern befreiten Kabelendes und
- einen der Druckfläche des Stempels zugeordneten Schneidring, durch welchen das Kabel hindurchführbar ist.

Im Vergleich zu den bisher zum Ablängen der Zugentlastungsfasern verwendeten Scheren können mit der erfindungsgemäßen Vorrichtung höhere Standzeiten und sichere Trennungen realisiert werden. Außerdem kann die erfindungsgemäße Vorrichtung leicht automatisiert werden. Es sind aber auch einfach aufgebaute und manuell bedienbare Vorrichtungen möglich, die dann vor Ort eingesetzt werden können. Zu diesem Vorteil gegenüber dem Laserschneiden oder Wasserstrahlschneiden kommt noch hinzu, daß die Gerätekosten um ein Vielfaches niedriger sind.

Gemäß einer bevorzugten Ausgestaltung der Erfindung ist der Schneidring auf einer aus Kugelscheibe und Kugelpfanne bestehenden Lagerung angeordnet. Hierdurch wird eine optimale Anpassung von Schneidring und Stempel gewährleistet.

Gemäß einer weiteren bevorzugten Ausgestaltung der Erfindung ist dem Schneidring ein axial ausgerichtete Kabelhalterung zugeordnet. Mit Hilfe einer derartigen Kabelhalterung kann dann das durch den Schneidring hindurchgeführte Kabel auf einfache Weise in der für das Ablängen der Zugentlastungsfasern erforderlichen Lage festgehalten werden.

Weiterhin hat es sich als vorteilhaft erwiesen, wenn der Stempel in bezug auf den Schneidring axial verschiebbar angeordnet ist. Hierdurch ergibt sich insbesondere bei stationär einsetzbaren Vorrichtungen ein besonders einfacher Aufbau.

Außerdem kann dann der Stempel um seine Achse drehbar angeordnet sein. Durch eine Drehung des Stempels kann dann das Trennen der Zugentlastungsfasern mit erheblich geringeren Stempelkräften durchgeführt werden.

Aufgrund von Versuchen hat es sich als besonders vorteilhaft für sichere Fasertrennungen erwiesen, wenn die Schneide des Schneidrings durch eine Schneidfase gebildet ist, die der negativen geometrischen Form des Stempels entspricht.

Ein Ausführungsbeispiel der Erfindung ist in der Zeichnung dargestellt und wird im folgenden näher beschrieben.

Es zeigen

Fig. 1 eine Vorrichtung zum Ablängen der Zugentlastungsfasern von Lichtwellenleiter-Kabeln im Längsschnitt,

Fig. 2 die in Fig. 1 dargestellte Vorrichtung beim Trennvorgang,

Fig. 3 die Schneide des bei der Vorrichtung gemäß den Fig. 1 und 2 verwendeten Schneidrings im Detail,

Fig. 4 ein Lichtwellenleiter-Kabel vor dem Ablängen der Zugentlastungsfasern,

Fig. 5 das in Fig. 3 dargestellte Lichtwellenleiter-Kabel nach dem Ablängen der Zugentlastungsfasern und

Fig. 6 das in Fig. 4 dargestellte Lichtwellenleiter-Kabel nach dem Anbringen einer Crimphülse.

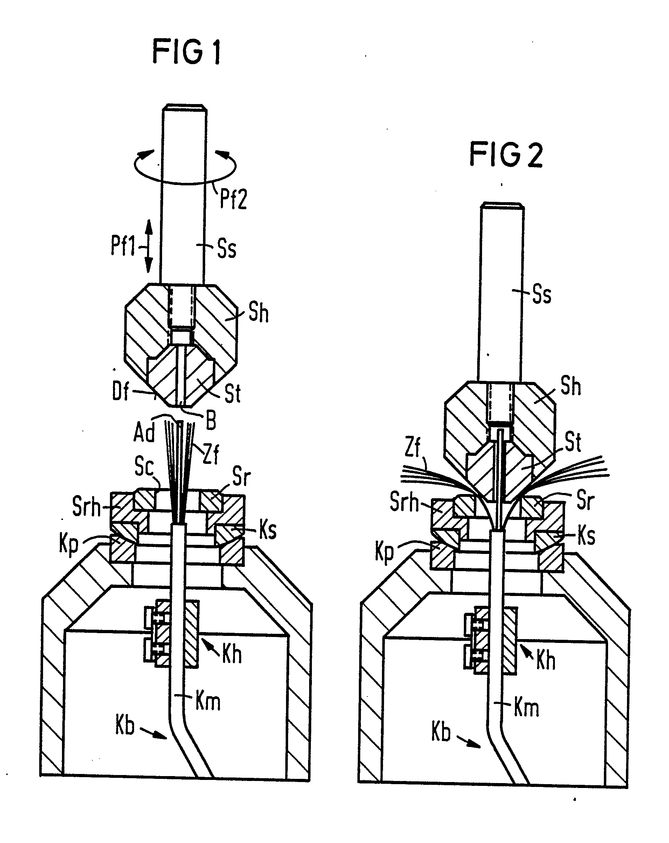

Fig. 1 zeigt einen Ständer Sd welcher etwa die Form einer nach unten offenen Glocke aufweist und auf seiner Oberseite von unten nach oben gesehen nacheinander eine Kugelpfanne Kp, eine Kugelscheibe Ks, einen Schneidringhalter Srh und einen Schneidring Sr trägt. Durch die vorstehend aufgeführten Teile kann von unten her ein Lichtwellenleiter-Kabel Kb geschoben werden, das innerhalb des Ständers Sd mit Hilfe einer manuell betätigbaren Kabelhalterung Kh genau in axialer Richtung federnd fixiert wird. Das Kabelende ist dabei vom Kabelmantel Km befreit, so daß die aus Aramid bestehenden Zugentlastungsfasern Zf und die Adern Ad hier sichtbar sind.

Axial fluchtend oberhalb des Schneidringes Sr ist ein Stempelschaft Ss angeordnet, der eine Stempelhalterung Sh und einen darin befestigten Stempel St trägt. Der Stempelschaft Ss ist in einem nicht näher dargestellten Oberteil heb-und senkbar und drehbar angeordnet, so wie es durch die Doppelpfeile Pf1, Pf2 angedeutet ist. Der Stempel St besitzt eine kegelförmige Druckfläche Df, die der mit Sc bezeichneten Schneide des Schneidrings Sr zugeordnet ist. Außerdem besitzt der Stempel St eine axiale Bohrung B, deren Durchmesser so bemessen ist, daß sie die Ader Ad des Lichtwellenleiter-Kabels Kb aufnehmen kann.

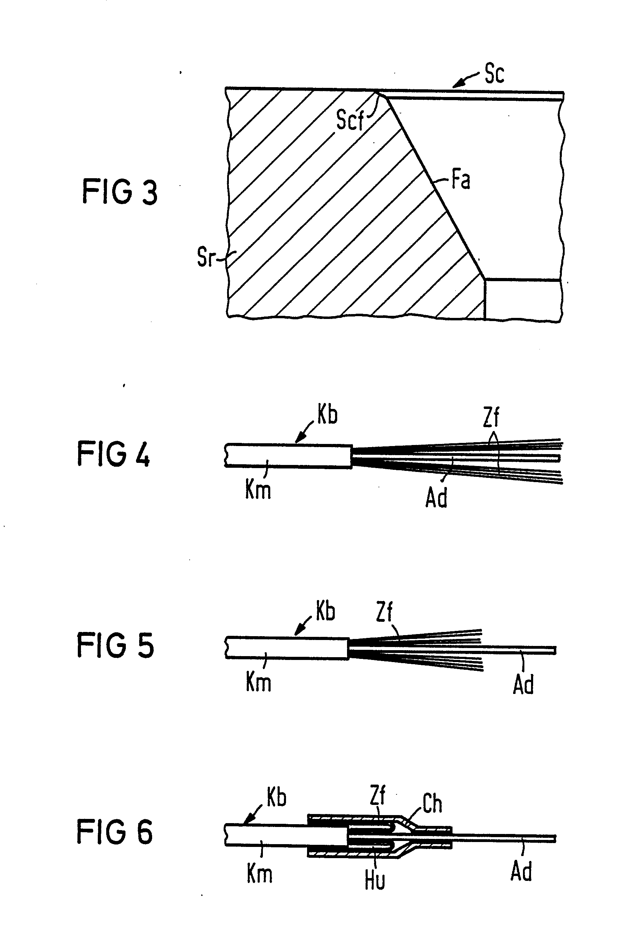

Die Ausbildung der Schneide Sc des Schneidringes Sr ist in Fig. 3 im Detail dargestellt. Die Schneide Sc umfaßt eine geläppte Schneidfase Scf die der negativen geometrischen Form des Stempels St entspricht und im dargestellten Beispiel eine Abmessung von 0,02 mm $\times$ 45° aufweist, wobei der Winkel von 45° zur Horizontalen gemessen ist. Um die Wirkung zu verstärken, wird vorab eine Fase Fa mit einer Abmessung von ca. 1 mm $\times$ 60° eingebracht.

Nach dem Fixieren des Kabels Kb in der Kabelhalterung Kh wird gemäß Fig. 2 die Ader Ad in die Bohrung B des Stempels St dadurch eingefädelt, daß dieser sich axial nach unten bewegt. Die Zugentlastungsfasern Zf werden manuell von der Ader Ad entfernt oder mit einer nichtdargestellten Ringdüse angesaugt und über den Schneidring Sr gelegt. Beim Aufsetzen des Stempels St auf die Zugentlastungsfasern Zf beginnt dann der eigentliche Trennvorgang. Die axial nach unten gerichtete Stempelkraft wird dabei so gewählt, daß ein sicheres Trennen der Zugentlastungsfasern Zf am gesamten Umfang der Schneide Sc (vergleiche Fig. 1) des Schneidrings Sr erfolgt. Eine in der Zeichnung nicht näher dargestellte Kraftbegrenzung kann beispielsweise durch einen Anschlag oder durch eine Feder realisiert werden. Die Stempelkraft beträgt ohne Drehung des Stempels St beispielsweise 1500 N. Wird der Stempel St gemäß dem Pfeil Pf2 in Fig. 1 beim Trennvorgang gedreht, so kann die Stempelkraft erheblich verringert werden.

Die in den Fig. 1 und 2 dargestellte und vorstehend beschriebene Vorrichtung ist nur ein Beispiel zur Verwirklichung der Erfindung. So kann die Druckfläche des Stempels auch gewölbt bzw. ballig, insbesondere kugelförmig, ausgebildet werden. Die Relativbewegungen zwischen Stempel St und Schneidring Sr können auch durch einen heb-und senkbaren bzw. drehbaren Schneidring Sr bewirkt werden. Die einstellbare Schneidringlagerung kann auch durch ein Kardangelenk bewirkt werden. Außerdem kann das geschilderte Verfahrensprinzip auch mit geringem Aufwand in einem zangenähnlichen Handwerkzeug verwirklicht werden, so daß es auch vor Ort eingesetzt werden kann. Weiterhin ist darauf hinzuweisen, daß das Verfahrensprinzip auch bei Kabeln mit mehreren Adern eingesetzt werden kann.

Die Fig. 3 bis 5 zeigen verschiedene Verfahrensstadien beim Ablängen der Zugentlastungsfasern Zf und dem anschließenden Anbringen einer Crimphülse. Dabei zeigt Fig. 2 das Lichtwellenleiter-Kabel Kb mit abgesetztem Kabelmantel Km, so wie es in die in den Fig. 1 und 2 dargestellte Vorrichtung eingefädelt wird. Es ist zu erkennen, daß die Ader Ad und die Zugentlastungsfasern Zf noch gleich lang sind.

Fig. 4 zeigt das Lichtwellenleiter-Kabel Kb nach dem Ablängen der Zugentlastungsfasern Zf entsprechend dem in Fig. 2 aufgezeigten Trennvorgang.

Fig. 5 zeigt das Prinzip der Zugentlastung. Es ist zu erkennen, daß die abgelängten Zugentlastungsfasern Zf über eine Hülse Hu zurückgeschlagen und dann mit einer Crimphülse Ch fixiert werden.

## Ansprüche

1. Vorrichtung zum Ablängen der Zugentlastungsfasern von Kabeln, insbesondere von Lichtwellenleiter-Kabeln,
**gekennzeichnet durch**
- einen Stempel (St) mit einer kegelförmigen oder gewölbten Druckfläche (Df),
- eine in den Stempel (St) in axialer Richtung eingebrachte Bohrung (B) zur Aufnahme des von Kabelmantel (Km) und Zugentlastungsfasern (Zf) befreiten Kabelendes und
- einen der Druckfläche (Df) des Stempels (St) zugeordneten Schneidring (Sr), durch welchen das Kabel (Kb) hindurchführbar ist.

2. Vorrichtung nach Anspruch 1,
**dadurch gekennzeichnet,**
daß der Schneidring (Sr) auf einer aus Kugelscheibe (Ks) und Kugelpfanne (Kp) bestehenden Lagerung angeordnet ist.

3. Vorrichtung nach einem der vorhergehenden Ansprüche,

**dadurch gekennzeichnet,**

daß dem Schneidring (Sr) eine axial ausgerichtete Kabelhalterung (Kh) zugeordnet ist.

4. Vorrichtung nach einem der vorhergehenden Ansprüche,

**dadurch gekennzeichnet,**

daß der Stempel (St) in bezug auf den Schneidring (Sr) axial verschiebbar angeordnet ist.

5. Vorrichtung nach Anspruch 4,

**dadurch gekennzeichnet,**

daß der Stempel (St) um seine Achse drehbar angeordnet ist.

6. Vorrichtung nach einem der vorhergehenden Ansprüche,

**dadurch gekennzeichnet,**

daß die Schneide (Sc) des Schneidringes (Sr) durch eine Schneidfase (Scf) gebildet ist, die der negativen geometrischen Form des Stempels (St) entspricht.

FIG 1

FIG 2

**FIG 3**

Sc

Scf

Fa

Sr

**FIG 4**

Kb

Km

Zf

Ad

**FIG 5**

Kb

Zf

Km

Ad

**FIG 6**

Kb

Zf

Ch

Km

Hu

Ad

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 981 422 (J. MOORE) * Bilder 1-3; Spalte 1, Zeilen 64-68; Spalte 2, Zeilen 1-24,49-58,63-68; Spalte 3, Zeilen 49-57 * | 1,4-6 | C 03 B 37/16 |
| A | --- | 2,3 | |
| Y | US-A-4 082 423 (A. GLISTA et al.) * Bild 3; Spalte 3, Zeilen 62-68; Spalte 4, Zeilen 1-7,14-16 * --- | 1,4-6 | |
| A | FR-A-2 578 985 (F.F.O.R.T. S.A.) * Das ganze Dokument * ----- | | |

**RECHERCHIERTE SACHGEBIETE (Int. Cl.4)**

C 03 B 37/16
G 02 B 6/44
G 02 B 6/38

Der vorliegende Recherchenbericht wurde für alle Patentansprüche erstellt

| Recherchenort | Abschlußdatum der Recherche | Prüfer |
|---|---|---|
| DEN HAAG | 08-05-1988 | WESBY P.B. |